# FASCICULE DE BREVET EUROPEEN

(11) **EP 2 130 470 B1**
(45) Date de publication et mention de la délivrance du brevet: **25.05.2011**
(21) Numéro de dépôt: 09356037.3
(22) Date de dépôt: 03.06.2009
(51) Int. Cl.: A47J 43/046, A47J 43/07

(54) **Récipient de travail comportant une platine porte-outil amovible et appareil électroménager de préparation culinaire muni d'un tel récipient**
Arbeitsbehälter, der eine abnehmbare Werkzeughalterungsplatte umfasst, und Elektrohaushaltsgerät zur Essenszubereitung, das mit einem solchen Behälter ausgestattet ist
Work container comprising a removable tool-holding tray and household cooking appliance equipped with such a container

(30) Priorité: 06.06.2008 FR 0803154
(43) Date de publication de la demande: 09.12.2009
(73) Titulaire: SEB S.A., 69130 Ecully (FR)
(72) Inventeur: Renaudin, Florent, 14150 Ouistreham (FR); Jabbour, Gisèle, 53100 Saint Georges Buttavent (FR); Beunache, Michèle, 53300 La Haie-Traversaine (FR)
(74) Mandataire: Kiehl, Hubert

(56) Documents cités:
- WO-A-2006/081113
- DE-U1- 29 915 733
- US-A- 3 785 579
- US-A- 6 092 922
- US-A1- 2007 201 306

## Description

La présente invention se rapporte au domaine technique général des appareils électroménagers de préparation culinaire et se rapporte plus particulièrement à un récipient de travail comportant une enveloppe comprenant une extrémité inférieure munie d'une ouverture recevant une platine porte-outil amovible.

Il est connu, de la demande de brevet US 2007/0201306, un appareil de préparation culinaire comportant un boîtier moteur et un récipient blender comportant une platine porte-outil amovible. Un tel récipient muni d'une platine porte-outil démontable présente l'avantage de permettre un nettoyage aisé de l'enveloppe du récipient et de l'outil rotatif. Pour éviter que l'appareil ne puisse fonctionner avec la platine porte-outil disposée seule sur le boîtier moteur, il est prévu un interrupteur de sécurité dans le boîtier moteur qui est actionné par un élément porté par une embase solidaire de l'enveloppe du récipient de sorte que le fonctionnement du moteur est autorisé uniquement en présence de l'enveloppe du récipient.

Un tel récipient avec une embase solidaire de l'enveloppe présente cependant l'inconvénient de présenter une forme relativement complexe qui peut être difficile à réaliser dans un matériau tel que du verre. De plus, l'accès à la platine porte-outil est rendu difficile par la présence de l'embase de sorte qu'il est prévu un outil spécifique pour son montage ou son démontage du récipient.

Pour remédier à la difficulté de fabrication du récipient en verre, il est connu de réaliser une enveloppe de forme simple en verre et de rapporter par collage une embase en matière plastique. Cependant, un tel mode de fabrication du récipient présente l'inconvénient de laisser des interstices à la jonction entre l'enveloppe et l'embase qui sont très difficiles à nettoyer et sont propices au développement de bactéries. De plus un tel mode de réalisation ne résout pas le problème de la difficulté de montage ou démontage de la platine porte-outil.

Aussi, un but de la présente invention est de proposer un récipient de travail pour appareil électroménager de préparation culinaire comportant une enveloppe de forme simple qui soit facile à fabriquer, notamment en verre, et qui soit facile à nettoyer. Un autre but de la présente invention est de proposer un récipient de travail comportant une platine porte-outil amovible qui soit facile à monter ou à démonter.

A cet effet, l'invention se rapporte à un récipient de travail pour appareil électroménager de préparation culinaire comportant une enveloppe comprenant une extrémité inférieure munie d'une ouverture recevant une platine porte-outil amovible, la platine porte-outil étant fixée par rotation sur un manchon d'accouplement entourant l'ouverture, le récipient comportant une embase indémontable de l'enveloppe, l'embase comprenant une jupe s'étendant autour du manchon d'accouplement, caractérisé en ce que l'embase est solidaire en translation de l'enveloppe et est montée libre en rotation sur l'enveloppe.

Une telle caractéristique présente l'avantage de permettre l'évacuation des éventuelles impuretés coincées dans l'interstice entre l'embase et l'enveloppe lors du nettoyage du récipient sous l'eau en faisant tourner l'embase de manière à décrocher les éventuelles impuretés.

Selon une autre caractéristique de l'invention, l'embase est libre en rotation suivant l'axe longitudinal du manchon d'accouplement et comporte des moyens d'entraînement en rotation de la platine porte-outil.

Selon une autre caractéristique de l'invention, les moyens d'entraînement en rotation de la platine porte-outil comportent au moins un doigt d'entraînement coopérant avec une butée.

Selon encore une autre caractéristique de l'invention, le doigt d'entraînement est porté par la platine porte-outil et coopère avec une butée portée par l'embase.

Une telle caractéristique procure une grande ergonomie d'utilisation lors des opérations de montage et démontage de la platine porte-outil en permettant le serrage et le desserrage de cette dernière par rotation de l'embase sur l'enveloppe.

Selon encore une autre caractéristique de l'invention, il est prévu un secteur s'étendant sur plus de 90° au niveau duquel l'embase peut tourner librement sans entraîner en rotation la platine porte-outil.

Une telle caractéristique permet de modifier l'orientation de l'enveloppe par rapport à l'embase sur un secteur prédéterminé sans agir sur le couple de serrage de la platine porte outil. Une telle caractéristique permet également d'éviter un desserrage involontaire de la platine porte-outil.

Selon une autre caractéristique de l'invention, la platine porte-outil comporte une face inférieure comprenant au moins un élément de préhension en saillie.

Selon une autre caractéristique de l'invention, le manchon d'accouplement comporte un filetage et la platine porte-outil est fixée par vissage sur l'enveloppe.

Selon une autre caractéristique de l'invention, l'enveloppe est en verre et l'embase est en matière plastique.

L'invention concerne également un appareil électroménager de préparation culinaire comprenant un boîtier muni d'un socle de réception comportant un entraîneur entraîné en rotation par un moteur, caractérisé en ce que ce qu'il comporte un récipient de travail tel que précédemment décrit prenant place sur le socle de réception.

Selon une autre caractéristique de l'invention, l'embase comporte au moins un élément actionneur venant coopérer avec un interrupteur de sécurité porté par le boîtier moteur pour autoriser le fonctionnement du moteur uniquement lorsque l'embase est placée sur le boîtier moteur.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire selon un mode particulier de réalisation de l'invention, le récipient étant accouplé au boîtier moteur,
- la figure 2 est une vue en perspective du boîtier moteur de l'appareil de la figure 1 représenté seul,
- la figure 3 est une vue en coupe de l'appareil de la figure 1,
- la figure 4 est une vue en perspective du récipient de la figure 1 avec la platine porte-outil démontée,
- la figure 5 est une autre vue en perspective du récipient de la figure 1 avec la platine porte-outil démontée,
- la figure 6 est une vue de dessous du récipient de travail équipé de la platine porte-outil.

Seuls les éléments nécessaires à la compréhension de l'invention ont été représentés. Pour faciliter la lecture des dessins, les mêmes éléments portent les mêmes références d'une figure à l'autre.

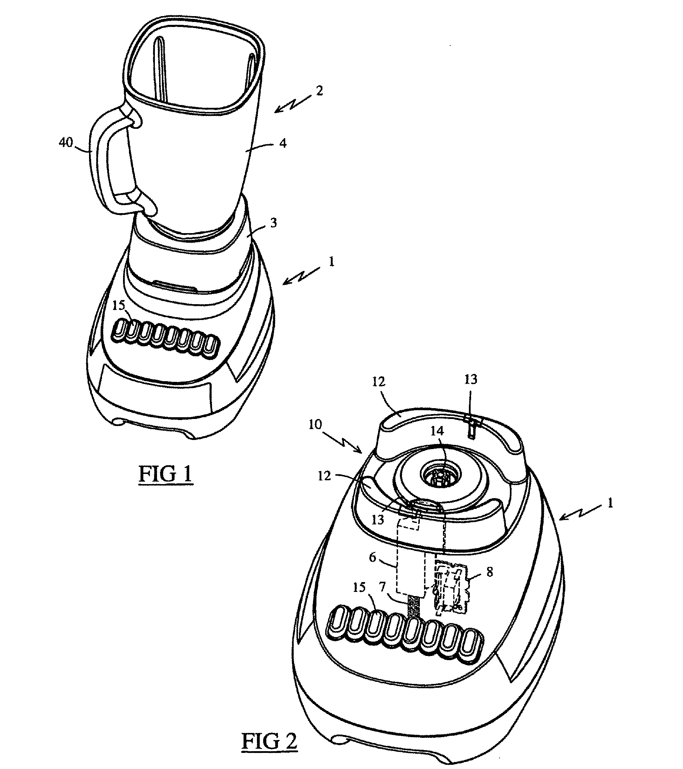

La figure 1 illustre un appareil électroménager de préparation culinaire selon l'invention comportant un boîtier moteur 1 et un récipient de travail 2 comprenant une embase 3 prévue pour être mise en place sur le boîtier moteur 1 selon plusieurs positions angulaires.

Conformément à la figure 2, la boîtier moteur 1 comporte un socle de réception 10 comportant deux reliefs de centrage 12 sur lesquels l'embase 3 peut s'engager selon quatre positions angulaires décalées l'une part rapport à l'autre de 90°.

De manière avantageuse, le socle de réception 10 comporte deux languettes élastiques 13 disposées symétriquement l'une par rapport à l'autre et munies de bossages coopérant avec l'embase 3 pour maintenir cette dernière en position enfoncée sur le socle de réception 10.

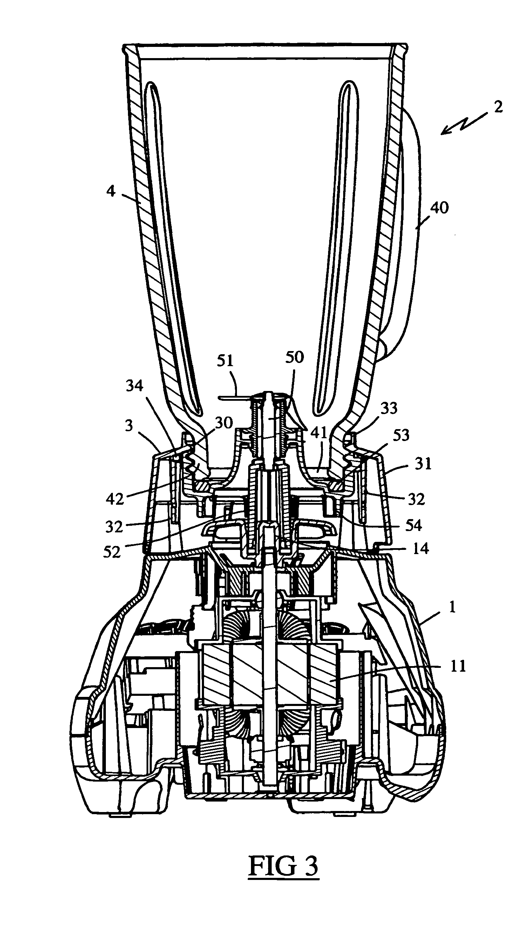

Le centre du socle de réception 10 comporte un entraîneur 14 qui est entraîné en rotation par un moteur 11, visible uniquement sur la figure 3, intégré dans le boîtier moteur 1, ce dernier comportant une série de boutons de commande 15 permettant de sélectionner différentes vitesses de rotation du moteur.

Le boîtier moteur 1 comporte également une commande de sécurité 6, représentée en pointillé sur la figure 2, pouvant se déplacer verticalement à l'intérieur du boîtier moteur 1, cette commande de sécurité 6 étant ramenée dans une position haute par un ressort 7.

Cette commande de sécurité 6 vient fermer un interrupteur 8 disposé sur le circuit d'alimentation du moteur 11 pour autoriser le fonctionnement du moteur lorsque la commande de sécurité 6 est déplacée vers le bas à l'encontre du ressort 7. L'interrupteur 8 est, à l'inverse, ouvert lorsque la commande de sécurité 6 est dans la position haute, telle qu'illustrée sur la figure 2, empêchant ainsi la mise en route du moteur.

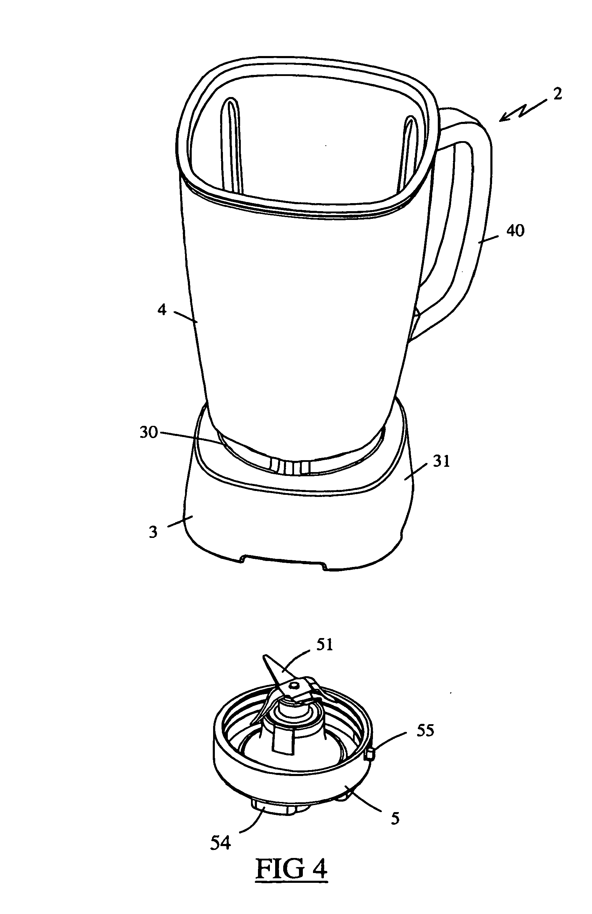

Conformément aux figures 3 à 5, le récipient de travail 2 comporte une enveloppe 4 comprenant une poignée 40 et comporte une extrémité supérieure ouverte pouvant recevoir un couvercle, non représenté sur les figures. L'enveloppe 4 comporte une extrémité inférieure muni d'une ouverture 41 qui est entourée par un manchon d'accouplement 42 comprenant un filetage 43 sur lequel vient se visser une platine porte-outil 5.

La platine porte-outil 5 comporte un corps circulaire muni d'un orifice central traversé par un axe 50 dont l'extrémité supérieure est solidaire d'un outil coupant 51 et dont l'extrémité inférieure est reliée à une douille 52 venant s'engager sur l'entraîneur 14 du boîtier moteur lorsque le récipient 2 est disposé sur le socle de réception 10. La platine porte-outil 5 comporte également un joint 53 annulaire assurant l'étanchéité de la liaison entre l'extrémité inférieure du manchon d'accouplement 42 et la platine porte-outil 5 lorsque cette dernière est montée sur l'enveloppe 4.

Afin de faciliter la manipulation de la platine porte-outil 5 et limiter les risques de blessure sur l'outil coupant 51, la platine porte-outil 5 comporte avantageusement quatre éléments de préhension 54 faisant saillie sur la face inférieure de son corps circulaire.

Comme on peut le voir sur la figure 3, l'embase 3 comporte une ouverture centrale 30 qui est traversée par l'extrémité inférieure de l'enveloppe 4 et comporte une jupe 31 périphérique entourant le manchon d'accouplement 42 présentant une forme adaptée pour venir s'engager autour des reliefs de centrage 12 du boîtier moteur 1. Le manchon d'accouplement 42 est ainsi intégré dans le volume défini par la jupe 31 de l'embase et le récipient 2 peut reposer de manière stable sur son embase 3.

Plus particulièrement selon l'invention, l'embase 3 est solidaire en translation de l'enveloppe 4 et est montée libre en rotation par rapport à cette dernière selon l'axe longitudinal du manchon d'accouplement 42.

De manière préférentielle, l'enveloppe 4 est réalisée en verre et l'embase 3 est réalisée en polypropylène. Lors du processus de fabrication du récipient 2, l'embase 3 est emmanchée en force par rotation autour du filetage 43 du manchon d'accouplement 42 pour que l'ouverture 30 passe au-delà de l'interruption du filetage 43 et que l'embase 3 soit rendue indémontable de l'enveloppe 4.

De manière avantageuse, le diamètre de l'ouverture 30 de l'embase 3 est supérieur de quelques millimètres au diamètre du manchon d'accouplement 42 au fond du filetage 43 de sorte que l'embase peut tourner librement sur le manchon d'accouplement. Une telle caractéristique permet un nettoyage aisé des éventuels aliments accumulés entre l'embase 3 et l'enveloppe 4 en plaçant l'embase 3 sous l'eau et en faisant préférentiellement tourner l'embase 3 pour favoriser l'évacuation des aliments. A titre d'exemple, le diamètre de l'ouverture 30 est supérieur de l'ordre de deux millimètres au diamètre du manchon d'accouplement 42.

Afin d'assurer un bon centrage de l'embase 3 sur la platine porte-outil 5, la face inférieure de l'embase comporte quatre nervures de guidage 34 en forme d'arc de cercle, réparties à 90° les unes des autres, qui viennent en bordure du corps circulaire de la platine porte-outil 5. Ces nervures 34 s'étendent avantageusement sur une hauteur de l'ordre de deux millimètres et présentent un chanfrein favorisant le centrage automatique de la platine porte-outil 5 sur les nervures 34.

De manière préférentielle, l'embase 3 comporte une collerette 33 à la périphérie de l'ouverture 30, cette collerette 33 s'étendant axialement en direction de l'enveloppe 4 et venant à proximité immédiate de cette dernière pour assurer un guidage axial de l'embase 3 sur l'enveloppe 4 et éviter que cette dernière n'ait tendance à se mettre de biais lorsque le récipient 2 repose sur son embase 3.

L'embase 3 comporte également quatre doigts d'actionnement 32, répartis à 90° les uns des autres, aptes à agir sur la commande de sécurité 6 du boîtier moteur 1 lorsque le récipient 2 est disposé sur le socle 10 pour autoriser le fonctionnement du moteur. Ces doigts d'actionnement 32 comportent un orifice 32A dans lequel viennent se verrouiller les languettes élastiques 13 du boîtier moteur 1 pour maintenir l'embase 3 en position enfoncée sur le socle 10 et contrer l'effort de rappel du ressort 7 de la commande de sécurité 6.

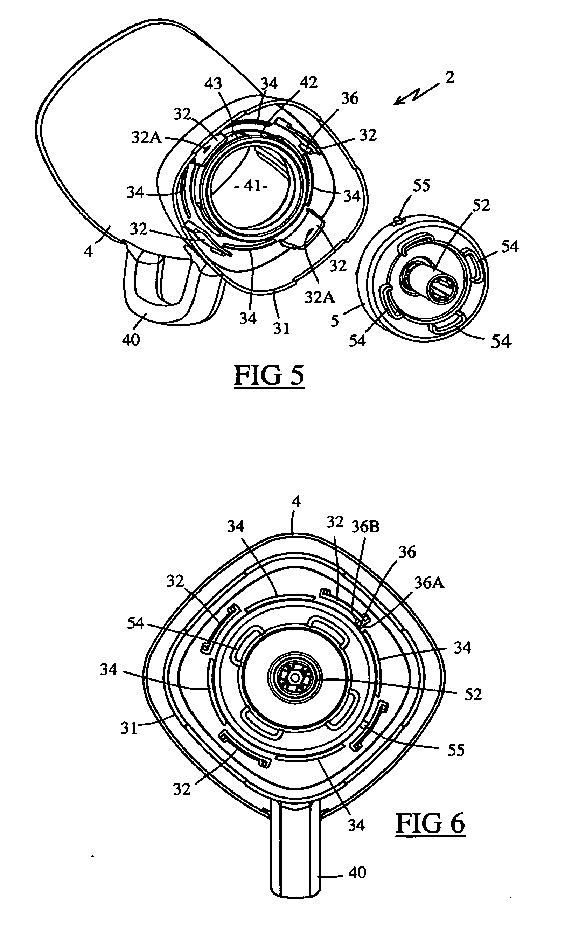

Conformément à la figure 6, l'un des doigts d'actionnement 32 comporte une butée 36 s'étendant radialement vers le centre de l'embase 3 pour venir coopérer avec un doigt d'entraînement 55 faisant saillie sur la périphérie extérieure du corps circulaire de la platine porte-outil 5, à une hauteur telle que le doigt d'entraînement 55 passe au dessus des nervures 34 et n'interfère pas avec ces dernières. La butée 36 s'étend préférentiellement sur une hauteur axiale équivalente à la hauteur axiale du manchon d'accouplement 42 de sorte que la butée 36 se trouve sur la trajectoire du doigt d'entraînement 55 dés que la platine porte-outil 5 est engagée sur le manchon d'accouplement 42.

Ainsi, lorsque l'utilisateur souhaite monter la platine porte-outil 5 sur le récipient 2, il saisit cette dernière par les éléments de préhension 54 puis engage la platine porte-outil 5 sur le filetage 43 en effectuant une rotation de quelques degrés avec la main. Cette opération s'effectue sans effort puisqu'il n'y a alors aucune résistance à la rotation de la platine porte-outil 5 en dehors du frottement sur le filetage 43.

L'utilisateur peut saisir ensuite la jupe 31 de l'embase et faire tourner cette dernière dans le sens du vissage pour amener une face 36A de la butée 36 contre le doigt d'entraînement 55 et entraîner ce dernier en rotation afin de poursuivre le vissage de la platine porte-outil 5 sur le manchon d'accouplement 42. Lors de cette opération l'utilisateur peut saisir à pleine main la jupe 31 de l'embase de sorte qu'il peut appliquer facilement un couple de serrage important lorsque le joint 53 de la platine porte-outil 5 parvient au contact de l'extrémité du manchon d'accouplement 42 et garantir ainsi une parfaite étanchéité de la liaison.

L'utilisateur peut alors disposer l'embase 3 du récipient 2 sur le socle 10 du boîtier moteur 1 et faire tourner librement l'enveloppe 4 dans un sens de rotation par rapport à l'embase 3, sur un secteur proche de 360°, pour orienter la poignée 40 du récipient selon son souhait. Cette liberté de rotation de l'enveloppe 4, sans risque de desserrage de la platine porte-outil 5, est permise par la possibilité de déplacer le doigt d'entraînement 55 dans le sens de son éloignement de la face 36A de la butée 36 jusqu'à venir au contact d'une face 36B de la butée 36, située à l'opposée de la face 36A.

Lorsque l'utilisateur souhaite démonter la platine porte-outil 5, il saisit la jupe 31 de l'embase et fait tourner cette dernière dans le sens du desserrage de la platine porte-outil 5 jusqu'à ce que la face 36B de la butée vienne en appui sur le doigt d'entraînement 55. Il peut alors facilement exercer un couple de desserrage important pour que l'effort généré par la face 36B de la butée sur le doigt d'entraînement 55 entraîne le desserrage de la platine porte-outil 5. Le démontage de la platine porte-outil 5 peut alors s'effectuer soit en poursuivant le dévissage de la platine porte-outil 5 en faisant tourner la jupe 31, soit en saisissant directement les éléments de préhension 54.

On obtient ainsi un appareil électroménager de préparation culinaire muni d'un récipient avec une enveloppe en verre qui est simple et économique à réaliser et qui peut être facilement nettoyée. De plus, un tel récipient présente l'avantage de permettre un montage et un démontage aisés de la platine porte-outil, l'utilisateur pouvant saisir la jupe de l'embase, facilement accessible, pour effectuer cette opération.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi dans une variante de réalisation, la platine porte-outil pourra être fixée sur le manchon d'accouplement par une liaison baïonnette.

## Revendications

1. Récipient de travail (2) pour appareil électroménager de préparation culinaire comportant une enveloppe (4) comprenant une extrémité inférieure munie d'une ouverture (41) recevant une platine porte-outil (5) amovible, ladite platine porte-outil (5) étant fixée par rotation sur un manchon d'accouplement (42) entourant ladite ouverture (41), ledit récipient (2) comportant une embase (3) indémontable de la ladite enveloppe (4), ladite embase (3) comprenant une jupe (31) s'étendant autour dudit manchon d'accouplement (42), **caractérisé en ce que** ladite embase (3) est solidaire en translation de ladite enveloppe (4) et est montée libre en rotation sur l'enveloppe (4).

2. Récipient de travail selon la revendication 1, **caractérisé en ce que** ladite embase (3) est libre en rotation suivant l'axe longitudinal du manchon d'accouplement (42) et comporte des moyens d'entraînement (55) en rotation de ladite platine porte-outil (5).

3. Récipient de travail selon la revendication 2, **caractérisé en ce que** lesdits moyens d'entraînement en rotation de la platine porte-outil (5) comportent au moins un doigt d'entraînement (55) coopérant avec une butée (36).

4. Récipient de travail selon la revendication 3, **caractérisé en ce que** ledit doigt d'entraînement (55) est porté par la platine porte-outil (5) et coopère avec une butée (36) portée par ladite embase (3).

5. Récipient de travail selon l'une quelconque des revendications 3 à 4, **caractérisé en ce qu'**il est prévu un secteur s'étendant sur plus de 90° au niveau duquel l'embase (3) peut tourner librement sans entraîner en rotation la platine porte-outil (5).

6. Récipient de travail selon l'une quelconque des revendications 1 à 3, **caractérisé en ce que** la platine porte-outil (5) comporte une face inférieure comprenant au moins un élément de préhension (54) en saillie.

7. Récipient de travail selon l'une quelconque des revendications 1 à 4, **caractérisé en ce que** ledit manchon d'accouplement (42) comporte un filetage (43) et **en ce que** ladite platine porte-outil (5) est fixée par vissage sur l'enveloppe (4).

8. Récipient de travail selon l'une quelconque des revendications 1 à 5, **caractérisé en ce que** l'enveloppe (4) est en verre et l'embase (3) en matière plastique.

9. Appareil électroménager de préparation culinaire comprenant un boîtier (1) muni d'un socle de réception (10) comportant un entraîneur (14) entraîné en rotation par un moteur (11), **caractérisé en ce que** ce qu'il comporte un récipient de travail (2) selon l'une quelconque des revendications 1 à 8 prenant place sur ledit socle de réception (10).

10. Appareil électroménager selon la revendication 9, **caractérisé en ce que** ladite embase (3) comporte au moins un élément actionneur (32) venant coopérer avec un interrupteur de sécurité (8) porté par le boîtier (1) moteur pour autoriser le fonctionnement du moteur (11) uniquement lorsque l'embase (3) est placée sur le boîtier (1) moteur.

## Claims

1. A working container (2) for a domestic cooking appliance including an envelope (4) comprising a lower end with an opening (41) receiving a removable tool-holding tray (5), said tool-holding tray (5) being secured by rotation to a coupling sleeve (42) surrounding said opening (41), said container (2) comprising a base (3) that cannot be removed from said envelope (4), said base (3) comprising a skirt (31) extending around said coupling sleeve (42), **characterised in that** said base (3) is integral in translation with said envelope (4) and is mounted such that it can rotate freely on the envelope (4).

2. A working container according to claim 1, **characterised in that** said base (3) can rotate freely along the longitudinal axis of the coupling sleeve (42) and comprises means (55) for driving the tool-holding tray (5) in rotation.

3. A working container according to claim 2, **characterised in that** said means for driving the tool-holding tray (5) in rotation comprise at least one driving pin (55) cooperating with a stop (36).

4. A working container according to claim 3, **characterised in that** said driving pin (55) is borne by the tool-holding tray (5) and cooperates with a stop (36) borne by said base (3).

5. A working container according to one of claims 3 to 4, **characterised in that** there is a sector extending over more than 90° wherein the base (3) can rotate freely without driving the tool-holding tray (5) in rotation.

6. A working container according to one of claims 1 to 3, **characterised in that** the tool-holding tray (5) comprises a lower face including at least one protruding gripping member (54).

7. A working container according to one of claims 1 to 4, **characterised in that** said coupling sleeve (42) comprises a threading (43) and **in that** said tool-holding tray (5) is fixed by screwing on the envelope (4).

8. A working container according to one of claims 1 to 5, **characterised in that** the envelope (4) is made of glass and the base (3) is made of plastic.

9. A domestic cooking appliance comprising a housing (1) with a receiving base (10) including a drive (14) driven in rotation by a motor (11), **characterised in that** it comprises a working container (2) according to one of claims 1 to 8 placed on said receiving base (10).

10. A domestic cooking appliance according to claim 9, **characterised in that** said base (3) comprises at least one actuating member (32) that cooperates with a safety switch (8) borne by the motor housing (1) to allowing the motor (11) to operate only when the base (3) is placed on the motor housing (1).

## Patentansprüche

1. Arbeitsbehälter (2) für ein Elektrohaushaltsgerät für kulinarische Zubereitungen, umfassend eine Ummantelung (4) mit einem unteren Ende, das mit einer Öffnung (41) versehen ist, die eine abnehmbare Werkzeugträgerplatine (5) aufnimmt, wobei die Werkzeugträgerplatine (5) mittels Drehung auf einer Kupplungsmuffe (42) befestigt wird, die die Öffnung (41) umgibt, wobei der Behälter (2) einen Unterteil (3) umfasst, der von der Ummantelung (4) untrennbar ist, wobei der Unterteil (3) eine Schürze (31) umfasst, die sich rund um die Kupplungsmuffe (42) erstreckt, **dadurch gekennzeichnet, dass** der Unterteil (3) mit der Ummantelung (4) verschiebefest verbunden und frei drehend auf der Ummantelung (4) befestigt ist.

2. Arbeitsbehälter nach Anspruch 1, **dadurch gekennzeichnet, dass** der Unterteil (3) entlang der Längsachse der Kupplungsmuffe (42) frei drehend ist und Antriebsmittel (55) umfasst, um die Werkzeugträgerplatine (5) in Drehung zu versetzen.

3. Arbeitsbehälter nach Anspruch 2, **dadurch gekennzeichnet, dass** die Antriebsmittel, um die Werkzeugträgerplatine (5) in Drehung zu versetzen, mindestens einen Antriebszapfen (55) umfassen, der mit einem Anschlag (36) zusammenwirkt.

4. Arbeitsbehälter nach Anspruch 3, **dadurch gekennzeichnet, dass** der Antriebszapfen (55) von der Werkzeugträgerplatine (5) getragen wird und mit einem Anschlag (36) zusammenwirkt, der vom Unterteil (3) getragen wird.

5. Arbeitsbehälter nach einem der Ansprüche 3 bis 4, **dadurch gekennzeichnet, dass** ein Bereich vorgesehen ist, der sich über mehr als 90° erstreckt, auf dessen Höhe sich der Unterteil (3) frei drehen kann, ohne die Werkzeugträgerplatine (5) in Drehung zu versetzen.

6. Arbeitsbehälter nach einem der Ansprüche 1 bis 3, **dadurch gekennzeichnet, dass** die Werkzeugträgerplatine (5) eine Unterseite aufweist, die mindestens ein vorspringendes Greifelement (54) umfasst.

7. Arbeitsbehälter nach einem der Ansprüche 1 bis 4, **dadurch gekennzeichnet, dass** die Kupplungsmuffe (42) ein Gewinde (43) aufweist, und **dadurch**, dass die Werkzeugträgerplatine (5) durch Verschrauben auf der Ummantelung (4) befestigt wird.

8. Arbeitsbehälter nach einem der Ansprüche 1 bis 5, **dadurch gekennzeichnet, dass** die Ummantelung (4) aus Glas und der Unterteil (3) aus Kunststoff hergestellt ist.

9. Elektrohaushaltsgerät für kulinarische Zubereitungen, umfassend ein Gehäuse (1), das mit einem Aufnahmesockel (10) ausgestattet ist, der einen Mitnehmer (14) umfasst, der von einem Motor (11) in Drehung versetzt wird, **dadurch gekennzeichnet, dass** es einen Arbeitsbehälter (2) nach einem der Ansprüche 1 bis 8 umfasst, der auf dem Aufnahmesockel (10) angeordnet wird.

10. Elektrohaushaltsgerät nach Anspruch 9, **dadurch gekennzeichnet, dass** der Unterteil (3) mindestens ein Betätigungselement (32) umfasst, das mit einem Sicherheitsschalter (8) zusammenwirkt, der vom Motorgehäuse (1) getragen wird, um den Betrieb des Motors (11) nur dann zuzulassen, wenn der Unterteil (3) auf dem Motorgehäuse (1) aufgesetzt ist.
